# EUROPÄISCHE PATENTSCHRIFT

(11) **EP 0 942 037 B1**
(45) Veröffentlichungstag und Bekanntmachung des Hinweises auf die Patenterteilung: **03.10.2007**
(21) Anmeldenummer: 99104410.8
(22) Anmeldetag: 05.03.1999
(51) Int. Cl.: C08K 5/00, C08J 5/18, C09D 5/00, C09J 9/00

(54) **Stabilisatoren enthaltende Polymerdispersionen oder Polymerlösungen und daraus erhältliche Polymerpräparationen**
Polymer dispersions or solutions containing stabilisers and polymer preparations obtainable therefrom
Dispersions ou solutions de polymères contenant des stabilisateurs et préparations de polymère obtenues à partir de celles-ci

(30) Priorität: 10.03.1998 DE 19810268
(43) Veröffentlichungstag der Anmeldung: 15.09.1999
(73) Patentinhaber: BASF Aktiengesellschaft, 67056 Ludwigshafen (DE)
(72) Erfinder: Haremza, Sylke Dr., 69151 Neckargemünd (DE); Krockenberger, Jürgen, 70569 Stuttgart (DE); Appel, Manfred, 76829 Landau (DE); Trauth, Hubert, 67373 Dudenhofen (DE); Pakusch, Joachim Dr., 67346 Speyer (DE); Sack, Heinrich, 67454 Hassloch (DE)

(56) Entgegenhaltungen:
- EP-A- 0 226 538
- EP-A- 0 479 725
- EP-A- 0 644 205
- EP-A- 0 669 124
- DE-A- 1 942 542
- DE-A- 3 408 949
- DE-A- 3 511 924
- US-A- 3 959 207
- PATENT ABSTRACTS OF JAPAN vol. 008, no. 145 (C-232), 6. Juli 1984 & JP 59 053545 A (ASAHI KASEI KOGYO KK), 28. März 1984

## Beschreibung

Die Erfindung betrifft Polymerdispersionen oder Polymerlösungen, welche im wesentlichen Wasser als Dispersionsmittel oder Lösungsmittel enthalten, enthaltend mindestens eine polymere Phase, welche Tocopherole in einem Anteil, bezogen auf die dispersionsmittel- bzw. lösungsmittelfreie Gesamtmenge aus Polymer und Tocopherolen, von 5 bis 30 Gew.-% enthält.

Weiter betrifft die Erfindung ein Verfahren zur Herstellung von Polymerpräparationen, welches dadurch gekennzeichnet ist, daß man das Dispersionsmittel oder Lösungsmittel aus den erfindungsgemäßen Polymerdispersionen oder Polymerlösungen entfernt. Ferner umfaßt die Erfindung die Verwendung erfindungsgemäßer Polymerdispersionen oder Polymerlösungen oder erfindungsgemäß hergestellter Polymerpräparationen zum Schutz von organischem Material, von pharmazeutischen oder kosmetischen Produkten, von Polymerdispersionen, Anstrichmitteln oder Lacken sowie von Kunststoffen gegen die schädigende Einwirkung von Licht, Hitze und/oder Oxidation. Weiter betrifft die Erfindung die Verwendung von erfindungsgemäßen Polymerdispersionen oder Polymerlösungen oder erfindungsgemäß hergestellter Polymerpräparationen als Lichtschutzmittel in kosmetischen Präparationen, als Zusatz zu Klebstoffen oder als Klebstoff, als Zusatz zu Kaschiermitteln oder als Kaschiermittel, als Zusatz zu Haftvermittlern oder als Haftvermittler oder als Zusatz zu Beschichtungsmitteln oder als Beschichtungsmittel, welche Substrate gegen die schädigende Einwirkung von Licht, Hitze und/oder Oxidation schützen.

Zur Stabilisierung von organischem Material wie beispielsweise Kunststoffen oder Lacken gegen die schädigende Wirkung von Licht, Hitze und/oder Oxidation werden verschiedenste Stabilisatoren eingesetzt. Da diese Stoffe meist in geringen Mengen zugegeben werden und/oder eine für die Dosierung schlecht geeignete Konsistenz besitzen, erfolgt deren Zugabe üblicherweise in Mischung mit einem Träger. Durch die Vermischung der Stabilisatoren mit einem solchen Träger wird dabei im wesentlichen zweierlei bewirkt: durch Einstellen eines geeigneten Mischungsverhältnisses von Träger zu Stabilisatoren erhält man in der Regel eine befriedigende Konsistenz und die für die spätere Dosierung zu verwendende Menge an (geträgerten) Stabilisatoren wird erhöht, was der Dosierbarkeit entgegenkommt. Meist ist die Konzentration an Stabilisatoren in solchen Mischungen höher eingestellt als für die spätere Verwendung benötigt wird.

In der Kunststoffverarbeitung besteht der Träger üblicherweise aus demselben Kunststoff, welcher auch durch Zugabe einer entsprechend formulierten Stabilisator/Träger-Mischung stabilisiert werden soll. Eine solche Mischung aus Stabilisatoren und dem betreffenden Kunststoff wird als Masterbatch bezeichnet.

Die Schrift EP-A 0 805 178 beschreibt pulverförmige Stabilisatoren, welche dadurch erhalten werden, daß man α-Tocopherol, gegebenenfalls in Mischung mit weiteren Additiven, auf Polyolefinen trägert. Dies erfolgt entweder durch Vermischen des α-Tocopherols (und gegebenenfalls weiteren Additiven) mit kommerziell erhältlichem, porösem Polyolefinpulver oder das α-Tocopherol (und gegebenenfalls weitere Additive) wird mit dem Polyolefin beispielsweise bei Temperaturen von 260°C koextrudiert und nach dem Abkühlen mittels kryogener Mahlung zu einem Pulver zerkleinert.

Nachteilig an den aus dem Stand der Technik bekannten, geträgerten Stabilisatoren ist deren maschinell oft aufwendige Herstellung sowie eine damit meist einhergehende thermische Belastung, welche nur die Verwendung von bestimmten Stabilisatoren (und Trägern) gestattet. Zudem sind die beschriebenen (geträgerten) Stabilisatoren durchweg für die Einarbeitung in Kunststoffe konzipiert. Eine Stabilisierung von Kunststoffdispersionen ist mit solchen Stabilisatorsystemen, auch im Falle von pulverförmigen Präparationen, in der Regel nicht möglich.

Aufgabe der vorliegenden Erfindung war es daher, Stabilisatorsysteme zur Verfügung zu stellen, welche sowohl in Polymerdispersionen als auch - gegebenenfalls nach einfachen verfahrenstechnischen Aufarbeitungsschritten - in Kunststoffmassen eingesetzt werden können. Diese Stabilisatorsysteme sollten zudem auf einfache und für die Komponenten schonende Weise herstellbar sein.

Die Aufgabe wurde erfindungsgemäß gelöst durch Polymerdispersionen oder Polymerlösungen, welche im wesentlichen Wasser als Dispersionsmittel oder Lösungsmittel enthalten, enthaltend mindestens eine polymere Phase, welche Tocopherole in einem Anteil, bezogen auf die dispersionsmittel- bzw. lösungsmittelfreie Gesamtmenge aus Polymer und Tocopherolen, von 5 bis 30 Gew.-% enthält.

Weiter wurde die Aufgabe erfindungsgemäß gelöst durch Polymerpräparationen, welche Tocopherole enthalten und welche dadurch erhalten werden, daß man das Dispersionsmittel oder Lösungsmittel aus erfindungsgemäßen Polymerdispersionen oder Polymerlösungen entfernt.

Zur Entfernung des Dispersionsmittels können alle üblicherweise bekannten verfahrenstechnischen Schritte angewendet werden. Als solche sind beispielsweise geeignet die Filtration, wobei hierunter allgemein die Trennung der dispergierten Phase vom Dispersionsmittel mittels einer für erstere undurchlässigen, für letzteres durchlässigen Schicht verstanden sein soll. Solch eine Schicht kann daher beispielsweise aus einem geeigneten Textil-oder Papierfilter oder auch aus einer geeigneten Metall-, Glas-oder Keramikfritte bestehen. Eine weitere Möglichkeit zur Entfernung des Dispersionsmittels bietet die Zentrifugation.

Weiter kann man sich zur Entfernung des Dispersionsmittels aber auch des Lösungsmittels beispielsweise der Gefriertrocknung bedienen. Eine weitere Möglichkeit besteht in der Verdampfung des Dispersionsmittels oder Lösungsmittels. Dies läßt sich vorteilhaft durch Sprühtrocknung bewerkstelligen. Wegen sicherheitstechnischer Aspekte kommt die Sprühtrocknung vor allem in Betracht, wenn die erfindungsgemäßen Polymerdispersionen oder Polymerlösungen, im Rahmen einer bevorzugten Ausführungsform, als Dispersionsmittel oder Lösungsmittel im wesentlichen Wasser enthalten.

Zur Gruppe der Tocopherole, welche die erfindungsgemäßen Polymerdispersionen oder Polymerlösungen und die aus ihnen erhaltenen erfindungsgemäß hergestellten Polymerpräparationen enthalten, zählen beispielsweise α-Tocopherol, β-Tocopherol, γ-Tocopherol, δ-Tocopherol und Mischungen dieser Verbindungen, sowie Tocopherolderivate, wie beispielsweise Tocopherylacetat, -succinat, -nicotinat und -polyoxyethylensuccinat ("Tocofersolan").

Die erfindungsgemäßen Polymerdispersionen oder Polymerlösungen und die aus ihnen erhaltenen erfindungsgemäß hergestellten Polymerpräparationen enthalten vorzugsweise eine polymere Phase, welche durch radikalische Polymerisation von einem oder mehreren ethylenisch ungesättigten Monomeren erhältlich ist. Als Monomere (Ausgangsmonomere), die für die Polymeren der erfindungsgemäßen Polymerdispersionen oder -lösungen und -präparationen geeignet sind, kommen vor allem jene in Betracht, ausgewählt aus den Gruppen
A) C₂-C₈-Alkene und deren Halogenide,
B) C₄-C₈-Alkadiene und deren Halogenide,
C) C₃-C₈-Alkensäuren und C₃-C₈-Alkensäure-C₁-C₂₀-alkylester,
D) Vinylalkylether mit C₁-C₂₀-Alkylresten,
E) Vinylester von C₁-C₂₀-Carbonsäuren,
F) C₈-C₂₀-Vinylaromaten,
G) C₇-C₁₉-Vinyl-N-Heteroaromaten,
H) C₃-C₈-Alkensäurenitrile,
I) C₃-C₈-Alkensäureamide und
J) Verbindungen der Formel 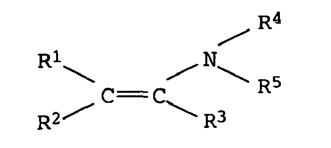
worin bedeuten
- R¹, R², R³, R⁴, R⁵: unabhängig voneinander Wasserstoff oder C₁-C₈-Alkyl, in welchem bis zu drei nicht benachbarte C-Atome durch N, NH oder N(C₁-C₄-Alkyl) und/oder bis zu drei nicht benachbarte CH₂-Gruppen durch Carbonylgruppen ersetzt sein können mit der Maßgabe, daß mindestens einer der Reste R⁴ oder R⁵ verschieden von Wasserstoff ist, oder
- R¹, R², R³: haben die vorher genannte Bedeutung und R⁴ und R⁵ bilden zusammen eine ungesättigte oder gesättigte C₃-, C₄-, C₅- oder C₆-Alkylenbrücke, in welcher bis zu zwei nicht benachbarte C-Atome durch N, NH oder N(C₁-C₄-Alkyl) und/oder bis zu zwei nicht benachbarte CH₂-Gruppen durch Carbonylgruppen ersetzt sein können.

Unter die Gruppe A der C₂-C₈-Alkene fallen neben Ethylen und Propylen vor allem Verbindungen mit endständiger Doppelbindung, also beispielsweise 1-Buten, 1-Penten, 1-Hexen, 1-Hepten und 1-Octen sowie die entsprechenden Iso-Verbindungen, wie Isobuten und Isopenten (2-Methyl-1-buten), und die weiteren zu 1-Penten, 1-Hexen, 1-Hepten und 1-Octen isomeren, im Alkylrest verzweigten α-Olefine. Von untergeordneter Bedeutung sind hier Verbindungen, wie beispielsweise 2-Buten, 2-Penten, 2- und 3-Hexen, 2- und 3-Hepten und 2-, 3- und 4-Octen sowie die, soweit möglich, in den Alkylresten verzweigten Alkene. Im Einzelfall können jedoch auch diese Alkene als Ausgangsmonomere zur Verwendung kommen.

Unter den Halogeniden der C₂-C₈-Alkene sind vor allem das Vinylchlorid und das vinylidenchlorid zu nennen.

Bei den C₄-C₈-Alkadienen der Gruppe B sind beispielsweise das Butadien und das Isopren, bei den entsprechenden Halogeniden vor allem das Chloropren, zu nennen.

Von untergeordneter Bedeutung sind hier C₆-C₈-Diene und C₅-C₈-Diene, die sich vom Butadien bzw. Chloropren durch Substitution mit entsprechenden linearen oder gegebenenfalls verzweigten Alkylresten ableiten. Im Einzelfall können jedoch auch solche Verbindungen als Ausgangsmonomere vorliegen.

Unter den C₃-C₈-Alkensäuren der Gruppe C sind vorzugsweise Acrylsäure, Methacrylsäure und Crotonsäure (2-Butensäure), unter den C₃-C₈-Alkensäurenitrilen der Gruppe H vorzugsweise Acrylsäure-, Methacrylsäure- und Crotonsäurenitril und unter den C₃-C₈-Alkensäureamiden der Gruppe I vorzugsweise die am N-Atom der Amidgruppe unsubstituierten Verbindungen Acrylsäure-, Methacrylsäure-und Crotonsäureamid zu verstehen.

Im Einzelfall können jedoch auch die entsprechenden, mit linearen oder verzweigten Alkylketten substituierten Acryl-, Methacryl-und Crotonsäure-, Acrylsäure-, Methacrylsäure- und Crotonsäurenitril- sowie Acrylsäure-, Methacrylsäure- und Crotonsäureamid-Derivate als Ausgangsmonomere Verwendung finden.

Als C₁-C₂₀-Alkylreste der Vinylalkylether von Gruppe D wie auch der C₃-C₈-Alkensäurealkylester von Gruppe C kommen beispielsweise in Frage Methyl, Ethyl, Propyl, i-Propyl, n-Butyl, sec-Butyl, i-Butyl, t-Butyl, n-Pentyl (Amyl), Isoamyl (3-Methylbutyl), Octyl, 2-Ethylhexyl, Lauryl, Palmityl, Stearyl und Eicosyl.

Als C₁-C₂₀-Carbonsäuren der Vinylester von Gruppe E sind beispielsweise zu nennen Essigsäure, Propionsäure, Buttersäure, Laurinsäure, Palmitinsäure, Stearinsäure (auch in technischer Qualität in Mischung mit Palmitinsäure) sowie verschiedene Versatic^{®}-Säuren, wie beispielsweise Versatic 5 (2,2-Dimethylpropionsäure), Versatic 6 (2,2-Dimethylbuttersäure) sowie Versatic 7, Versatic 8, Versatic 9 und Versatic 10, d.h. 2-Ethyl-2-methylbutter-, -pentan-, -hexan-, -heptan- und -octansäure, sowie deren Mischungen.

Unter den C₈-C₂₀-Vinylaromaten der Gruppe F als Ausgangsmonomere sind vor allem Styrol sowie dessen am Benzolring in o-, m- oder p-Stellung zur Vinylgruppe mit Methyl, Ethyl, n-Propyl, i-Propyl, n-Butyl, sec-Butyl, i-Butyl oder t-Butyl monosubstituierten Derivate zu verstehen. Beispielhaft seien hier o-, m- und p-Vinyltoluol genannt. Diese letztgenannten Verbindungen, wie auch die übrigen am Benzolring substituierten Styrol-Derivate, können auch als Mischungen als Ausgangsmonomere Verwendung finden. Solche Mischungen resultieren oftmals als Produkte bei der großtechnischen Herstellung dieser vinylaromatischen Verbindungen und werden üblicherweise als solche zur Weiterverarbeitung zu Polymeren eingesetzt.

Als weitere C₈-C₂₀-Vinylaromaten kommen in Frage auch die Isomeren des Divinylbenzols sowie deren Mischungen. Weiterhin sind hier auch die mit Alkylgruppen, wie beispielsweise Methyl oder Ethyl, an der Vinylgruppe des Styrols oder substituierten Styrols substituierten Verbindungen zu nennen, beispielsweise α-Methyl-oder α-Ethylstyrol sowie α-Methyl- oder α-Ethylvinyltoluol oder Mischungen dieser Verbindungen untereinander.

Zu den C₇-C₁₉-Vinyl-N-Heteroaromaten der Gruppe G zählen vor allem die Vinyl-Derivate des Pyridins und deren Isomeren sowie die gegebenenfalls noch zusätzlich am Pyridinring mit Alkyl, wie beispielsweise Methyl oder Ethyl, substituierten Verbindungen und deren Isomeren. Beispielhaft seien hier genannt 2-, 3- und 4-Vinylpyridin sowie das α-Methyl-5-vinylpyridin. Im Einzelfall können auch höherkondensierte Vinyl-N-Heteroaromaten, wie beispielsweise das N-Vinylcarbazol, als Ausgangsmonomere dienen.

Als weitere Ausgangsmonomere kommen in Frage Verbindungen der Gruppe J entsprechend der oben gezeigten Formel. Die Reste R¹ und R⁵ können hierbei unabhängig voneinander Wasserstoff oder reine C₁-C₈-Alkylgruppen wie beispielsweise Methyl, Ethyl, n-Propyl, i-Propyl oder n-Butyl, sec-Butyl, i-Butyl, n-Pentyl, Isoamyl, 2-Ethylhexyl oder Octyl sein oder bis zu drei nicht benachbarte C-Atome können in diesen C₁-C₈-Alkylgruppen durch N, NH oder N(C₁-C₄-Alkyl) und/oder bis zu drei nicht benachbarte CH₂-Gruppen können durch Carbonylgruppen ersetzt sein. Mögliche C₁-C₄-Alkylgruppen der N(C₁-C₄-Alkyl)-Gruppe wurden bereits zuvor unter den C₁-C₈-Alkylresten aufgeführt.

Weiterhin kann natürlich auch der Ersatz von bis zu drei C-Atomen durch N, NH oder N(C₁-C₄-Alkyl) und von bis zu drei CH₂-Gruppen durch Carbonylgruppen in ein und demselben Rest der Reste R¹ bis R⁵ erfolgen, so daß beispielsweise auch zwei benachbarte CH₂-Gruppen durch eine Gruppierung -NH-CO- oder -N(C₁-C₄-Alkyl)-CO-ersetzt sein können. Da das am Stickstoffatom unsubstituierte Enamin, die Reste R⁴ und R⁵ wären in diesem Fall beide Wasserstoff, nicht beständig ist, gilt zudem für die Verbindungen der Gruppe J der obigen Formel die Maßgabe, daß mindestens einer der beiden Reste R⁴ oder R⁵ verschieden von Wasserstoff ist.

Als mögliche Reste R¹ bis R⁵, in welchen bis zu drei nicht benachbarte C-Atome durch N, NH oder N(C₁-C₄-Alkyl) und/oder bis zu drei nicht benachbarte CH₂-Gruppen durch Carbonylgruppen ersetzt sein können, kommen somit beispielsweise in Frage u.a. H-[NR'- (CH₂)₂-]ₘ-NR'-CO- oder auch 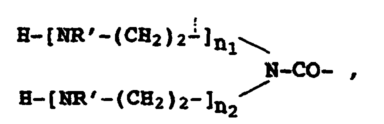 wobei R' Wasserstoff oder C₁-C₄-Alkyl bedeutet und m gleich 0, 1 oder 2 sein kann und n₁ und n₂ unabhängig voneinander gleich 0 oder 1 sein können. Weiter kommen in Frage u.a. Reste H-[NR'-(CH₂)₂-]ₚ-, wobei R' wiederum für Wasserstoff oder C₁-C₄-Alkyl steht und p gleich 0, 1, 2 oder 3 sein kann.

Als weitere Ausgangsmonomere der Gruppe J kommen Verbindungen der oben gezeigten Formel in Frage, in welchen die Reste R¹ bis R³ die bereits beschriebene Bedeutung haben und R⁴ und R⁵ zusammen eine ungesättigte oder gesättigte C₃-, C₄-, C₅- oder C₆-Alkylenbrücke bilden, in welcher bis zu zwei nicht benachbarte C-Atome durch N, NH oder N(C₁-C₄-Alkyl) und/oder bis zu zwei nicht benachbarte CH₂-Gruppen durch Carbonylgruppen ersetzt sein können. Die Reste R⁴ und R⁵ bilden daher mit den entsprechenden Alkylenbrücken gesättigte oder ungesättigte iso- oder N-heterocyclische vier-, fünf-, sechs- oder siebengliedrige Ringsysteme. Beispielhaft seien hier, unter Einbeziehung des die Reste R⁴ und R⁵ tragenden N-Atoms, genannt

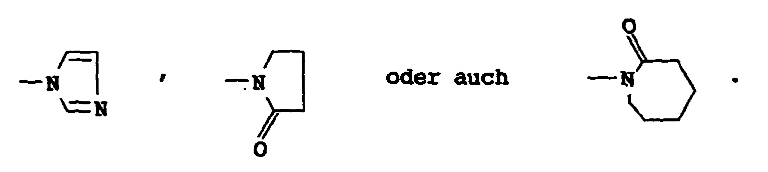

Bevorzugt kommen als Ausgangsmonomere Verbindungen der oben gezeigten Formel in Frage, in welchen mindestens zwei der Reste R¹ bis R³, besonders bevorzugt alle Reste R¹ bis R³ Wasserstoff bedeuten. Beispielhaft seien für letztere genannt N-Vinylformamid, hier bedeutet u.a. einer der Reste R⁴ und R⁵ Wasserstoff und der andere Rest Methyl, in welchem eine (bzw. die) CH₂-Gruppe durch eine Carbonylgruppe ersetzt ist, N-Vinyl-2-pyrrolidon sowie N-vinyl-ε-caprolactam.

Die polymere Phase bzw. die polymeren Phasen der erfindungsgemäßen Polymerdispersionen oder Polymerlösungen oder der aus diesen erhältlichen Polymerpräparationen enthalten bevorzugt Monomere kombiniert aus den Gruppen B/C/F/H, C/F/H, B/C/F, C/F, A/E, E/J, C/E, C/J und C/I. Beispielsweise sind dies im Falle der Kombination B/C/F/H Copolymere aus Butadien, (Meth)Acrylsäure bzw. (Meth)Acrylsäureestern, Styrol und Acrylnitril, im Falle der Kombination C/F/H Copolymere aus (Meth)Acrylsäure bzw. (Meth)Acrylsäureestern, Styrol und Acrylnitril, im Falle der Kombination B/C/F Copolymere aus Butadien, (Meth)Acrylsäure bzw. (Meth)Acrylsäureestern und Styrol, im Falle der Kombination C/F Copolymere aus (Meth)Acrylsäure bzw. (Meth)Acrylsäureestern und Styrol, im Falle der Kombination A/E Copolymere aus Ethylen mit Vinylestern, im Falle der Kombination E/J Copolymere aus Vinylestern mit N-Vinyl-2-pyrrolidon, im Falle der Kombination C/E Copolymere aus (Meth)Acrylsäureestern und/oder Crotonsäure bzw. Crotonsäureestern mit Vinylestern, im Falle der Kombination C/J Copolymere aus (Meth)Acrylsäure bzw. (Meth)Acrylsäureester mit N-Vinyl-α-pyrrolidon sowie im Falle der Kombination C/I Copolymere aus (Meth)Acrylsäure bzw. (Meth)Acrylsäureester mit Acrylsäureamid (die Schreibweise "(Meth)Acrylsäure" bezeichnet hierbei Methacrylsäure oder Acrylsäure).

Ferner können in diesen genannten sowie auch in anderen Kombinationen unterschiedliche, zu einer Gruppe gehörende Monomere vorliegen. So kann - wie im Falle der (Meth)Acrylsäure und ihrer Ester gezeigt - Styrol zum Teil oder auch vollständig beispielsweise durch α-Methylstyrol, Vinyltoluol oder Divinylbenzol oder zum Teil oder vollständig beispielsweise durch 2-und/oder 4-Vinylpyridin und/oder 2-Methyl-5-vinylpyridin ersetzt sein. Bei teilweisem bzw. vollständigem Ersatz des Styrols durch solche Verbindungen der Gruppe G ergeben sich Copolymere, welche weiteren bevorzugten Kombinationen B/C/F/G/H, C/F/G/H, B/C/F/G und C/F/G bzw. B/C/G/H, C/G/H, B/C/G und C/G von Monomeren zuzuordnen sind.

Im Falle der Kombination A/E der Gruppen von Monomeren können dementsprechend neben Ethylen beispielsweise auch Anteile anderer Alkene oder auch Alkenhalogenide, wie Propylen oder Vinylchlorid, oder Mischungen von verschiedenen Vinylestern zugegen sein.

Weitere bevorzugte polymere Phasen enthalten nur Monomere der Gruppe C. Hierunter zählen vor allem die Polymere der Acrylsäure und der Methacrylsäure und deren jeweilige Ester. Auch hier können Mischungen der jeweiligen monomeren Säuren, der jeweiligen monomeren Ester oder auch Mischungen solcher Säuren in Mischung mit einer Mischung solcher Ester vorliegen. Als weitere polymere Phasen kommen auch solche auf Basis von Vinylchlorid in Frage.

Polymerdispersionen, -lösungen oder -präparationen mit polymeren Phasen, welche sich zum überwiegenden Teil oder sogar ausschließlich von nicht-halogenierten C₂-C₈-Alkenen und/oder nicht-halogenierten C₄-C₈-Alkenen ableiten, beispielsweise wären dies homopolymeres Ethylen oder Propylen, copolymeres Ethylen/Propylen oder Polybutadien, kommt dagegen im Rahmen der vorliegenden Erfindung eine untergeordnete Bedeutung zu.

Hinsichtlich der chemischen Identität der Verbindungen, welche in den vorstehend aufgeführten Kombinationen von Ausgangsmonomeren unter den Substanzklassen der (Meth)Acrylsäureester bzw. Vinylester subsumiert wurden, sei explizit auf die obigen Ausführungen zu den Ausgangsmonomeren der Gruppe C (in Verbindung mit den Ausführungen in Gruppe D betreffend mögliche C₁-C₂₀-Alkylreste) bzw. der Gruppe E verwiesen.

Weiter wird ein Verfahren zur Herstellung der erfindungsgemäßen Polymerdispersionen oder Polymerlösungen beansprucht, welches dadurch gekennzeichnet ist, daß man Tocopherole solche Tocopherole nicht enthaltenden Polymerdispersionen oder Polymerlösungen (Ausgangspolymerdispersionen oder Ausgangspolymerlösungen) zugibt.

Die Zugabe der Tocopherole erfolgt vorzugsweise bei einer Temperatur der Ausgangspolymerdispersion oder -lösung von 15 bis 95°C. Vorteilhaft ist hierbei, wenn die Tocopherole bei der Temperatur der Dispersion oder Lösung in flüssiger Form vorliegen. Andernfalls können sie auch in einem geeigneten Lösungsmittel gelöst zugegeben werden. Ein solches geeignetes Lösungsmittel ist - zumindest in begrenztem Umfang - mit dem Dispersionsmittel oder Lösungsmittel, es handelt sich dabei im wesentlichen um Wasser, mischbar. Eine weitere mögliche Vorgehensweise besteht darin, einen lösungsvermittelnden Hilfsstoff einzusetzen, welcher - zumindest in begrenztem Umfang - mit dem Dispersionsmittel mischbar ist und in welchem die Tocopherole zum Teil gelöst werden können. In der Regel sind als Lösungsmittel bzw. als lösungsvermittelnde Hilfsstoffe niedere Alkanole, wie z.B. Methanol, Ethanol, Propanol, Isopropanol, n-Butanol, Isobutanol oder auch t-Butanol geeignet.

Entsprechende Ausgangspolymerdispersionen oder -lösungen lassen sich durch Emulsions- oder Lösungspolymerisation nach an sich bekannten Verfahrensweisen herstellen, wobei üblicherweise noch dem Fachmann bekannte Hilfsstoffe, wie z.B. Tenside, Dispergierhilfsmittel usw. zugegen sind. Der Gehalt an polymerer Phase/polymeren Phasen (Trockenmasse) in solchen Ausgangspolymerdispersionen oder -lösungen beträgt üblicherweise 30 bis 55 Gew.-%, bezogen auf die Summe aus der Trockenmasse der polymeren Phase(n), dem Dispersions- oder Lösungsmittel und den gegebenenfalls vorliegenden Hilfsmitteln.

Da die erfindungsgemäßen Polymerdispersionen oder -lösungen im wesentlichen Wasser als Dispersions- oder Lösungsmittel enthalten, wird eine entsprechende wäßrige Ausgangspolymerdispersion oder -lösung zu deren Herstellung verwendet. Weiter ist es auch möglich, wasserlösliche oder in Wasser dispergierbare Polymere/Copolymere, gegebenenfalls unter Zugabe von üblichen Hilfsstoffen, in Wasser zu lösen bzw. zu dispergieren.

Copolymere auf Basis von N-Vinyl-2-pyrrolidon (Gruppe J) und Vinylacetat (Gruppe E) werden üblicherweise durch Lösungspolymerisation in Ethanol oder Isopropanol hergestellt werden. Daher lassen sich in diesem Fall auch entsprechende alkoholische Polymerlösungen als Ausgangspolymerlösung verwenden.

Weiter können solche Copolymere oder auch Homopolymere des N-Vinyl-2-pyrrolidons, diese Copolymere/Homopolymere können als Pulver kommerziell z.B. unter dem Markennamen Kollidon^{®} (BASF Aktiengesellschaft) bezogen werden, in Wasser gelöst oder dispergiert werden, um eine wäßrige Ausgangspolymerdispersion oder -lösung zu erhalten.

Natürlich kann man auch Mischungen von erfindungsgemäßen Polymerdispersionen oder -lösungen herstellen, wobei sowohl Dispersionen untereinander, Lösungen untereinander als auch Dispersionen mit Lösungen gemischt werden können. Hierbei läßt sich eine mögliche Unverträglichkeit der Dispersionen/Lösungen untereinander bzw. miteinander durch einfache Vorversuche feststellen bzw. solch eine Unverträglichkeit ist dem Fachmann oftmals bekannt. Des weiteren können besagte Stabilisatoren auch entsprechenden Mischungen von Ausgangspolymerdispersionen und/oder -lösungen zugegeben werden.

Die erfindungsgemäßen Polymerdispersionen oder Polymerlösungen sowie die erfindungsgemäß hergestellten Polymerpräparationen enthalten die Tocopherole in einem Anteil, bezogen auf die dispersionsmittel- bzw. lösungsmittelfreie Gesamtmenge aus Polymer und Tocopherolen, von 5 bis 30 Gew.-%.

Werden erfindungsgemäße Polymerdispersionen zu erfindungsgemäßen Polymerpräparationen aufgearbeitet, so ist es von Vorteil, wenn hierbei die Glastemperatur T_{G} des Polymers bzw., bei Vorliegen mehrerer polymerer Phasen, des Polymers mit der niedrigsten T_{G} nicht überschritten wird. Die solchermaßen erhaltenen Präparationen weisen dann Primärteilchen auf, welche ähnliche Abmessungen wie die Primärteilchen der Ausgangspolymerdispersion besitzen. Geht man von Dispersionen aus, welche Primärteilchengrößen von typischerweise 20 bis 5000 nm besitzen, so erhält man Präparationen, welche je nach Aufarbeitung größere Agglomerate besitzen können. Die Primärteilchen dieser Agglomerate besitzen jedoch zu den Polymerteilchen der (Ausgangs-)Dispersionen vergleichbare Dimensionen. Hier kann man beipielsweise mit einer deutlich homogeneren Verteilung solcher Präparationen, z.B. bei der Einarbeitung in Kunststoffe, rechnen.

Im Hinblick auf die Bereitstellung von staubarmen oder gar staubfreien Präparationen ist die Bildung solcher Agglomerate üblicherweise sogar erwünscht.

Wird zur Herstellung von erfindungsgemäßen Polymerpräparationen von erfindungsgemäßen Polymerlösungen ausgegangen, so lassen sich über die Primärteilchengrößen naturgemäß wenig Aussagen treffen. Von Vorteil ist jedoch auch hier eine entsprechende.Aufarbeitung unterhalb der entsprechenden T_{G}- Werden solche Lösungen durch Sprühtrocknung vom Dispersionsmittel befreit, so ist dem Fachmann eine Abschätzung der Teilchengrößen aus Parametern, wie z.B. der Konzentration an Trockenmasse in der Lösung in Verbindung mit der Tröpfchengrößenverteilung beim Versprühen, in der Regel möglich.

Im Rahmen der Erfindung wird weiter die Verwendung der erfindungsgemäßen Polymerdispersionen oder Polymerlösungen oder der erfindungsgemäß hergestellten Polymerpräparationen zum Schutz von organischem Material gegen die schädigende Einwirkung von Licht, Hitze und/oder Oxidation beansprucht.

Weiter wird die Verwendung der erfindungsgemäßen Polymerdispersionen oder -lösungen oder erfindungsgemäß hergestellten Polymerpräparationen zum Schutz von pharmazeutischen oder kosmetischen Produkten gegen die schädigende Einwirkung von Licht, Hitze und/oder Oxidation beansprucht. Die erfindungsgemäßen Dispersionen oder Lösungen oder erfindungsgemäß hergestellten Präparationen werden den kosmetischen oder pharmazeutischen Produkten entweder direkt zugegeben, z.B. im Falle von Cremes, Salben oder Pasten, oder dienen, beispielsweise bei Tabletten oder Dragees, der Aufbringung einer schützenden Umhüllung. In letzterem Fall wird man üblicherweise von solchen Dispersionen, Lösungen oder Präparationen ausgehen, in welchen die darin enthaltenen Polymere relativ niedrige Glastemperaturen besitzen. Hierdurch ist eine schonende Umhüllung nach den üblichen Verfahren möglich.

Weiter wird die Verwendung der erfindungsgemäßen Polymerdispersionen oder -lösungen oder erfindungsgemäß hergestellten Präparationen als Lichtschutzmittel in kosmetischen Präparationen beansprucht. Solche Präparationen liegen üblicherweise in cremeartiger Konsistenz (z.B. Sonnencreme) oder milchartiger Konsistenz (z.B. Sonnenmilch) vor und dienen dem Schutz von lebendem organischem Material, wie z.B. der Haut von Menschen oder im speziellen Fall auch von Tieren gegen Sonneneinstrahlung. Je nach gewünschter Konsistenz kann daher die Zugabe von erfindungsgemäßen Polymerdispersionen oder -lösungen, beispielsweise bei einer gewünschten milchartigen Konsistenz, oder die Zugabe von erfindungsgemäß hergestellten Polymerpräparationen, beispielsweise bei einer gewünschten cremeartigen Konsistenz, vorteilhaft sein. Weiter kann es vorteilhaft sein, solche erfindungsgemäßen Dispersionen oder Lösungen oder erfindungsgemäß hergestellten Präparationen zu verwenden, welche Polymere enthalten, deren Glastemperaturen so gewählt sind, daß beispielsweise auf der lebenden Haut eine Verfilmung der Polymere stattfindet. Dies kann zu einer besseren Haftung des Lichtschutzmittels bzw. der kosmetischen Präparation, welche ein solches Lichtschutzmittel enthält, führen.

Weiter wird die Verwendung der erfindungsgemäßen Polymerdispersionen oder -lösungen oder erfindungsgemäß hergestellten Polymerpräparationen als Zusatz zu Klebstoffen oder als Klebstoff beansprucht. Vor allem in letzterem Fall ist natürlich ein Augenmerk auf die darin enthaltenen Polymere und ihre entsprechenden Glastemperaturen T_{G} von Bedeutung. Da die Verarbeitungstemperatur eines solchen Klebstoffs von der jeweiligen konkreten Anwendung abhängt, ist auch die Auswahl von Polymeren geeigneter T_{G} von dieser Anwendung und der benötigten Verarbeitungstemperatur abhängig. Diese Auswahl ist durch den Fachmann üblicherweise leicht zu bewerkstelligen.

Weiter werden die erfindungsgemäßen Polymerdispersionen oder -lösungen oder erfindungsgemäß hergestellten Polymerpräparationen als Zusatz zu Kaschiermitteln verwendet oder sie können auch selbst als kaschiermittel Verwendung finden. Hinsichtlich der Auswahl geeigneter Polymere mit für diese Verwendung geeignetem Eigenschaftsprofil gilt sinngemäß das bereits oben bei der Verwendung als Zusatz zu Klebstoffen oder als Klebstoff Gesagte. Solche Kaschiermittel dienen zum Verbinden gleicher oder unterschiedlicher Substrate.

Als Substrate eignen sich z.B. Polymerfolien aus Polyethylen, orientiertem Polypropylen, Polyamid, Polyethylenterephthalat, Polyacetat, Zellglas etc., oder auch Papier oder Metallfolien, z.B. aus Aluminium.

Die Polymerfolien können miteinander (Verbundfolienkaschierung) oder transparente Polymerfolien mit Papier (Glanzfolienkaschierung) sowie Polymerfolien bzw. Papier mit Metallfolien, z.B. Aluminiumfolien, verklebt werden.

Die erfindungsgemäßen Dispersionen oder Lösungen oder erfindungsgemäß hergestellten Präparationen können auch für die Herstellung von Verbundglas Verwendung finden. Sie dienen hier ebenfalls entweder als Zusatz in den entsprechenden polymeren Zwischenschichten oder bilden selbst diese polymeren Zwischenschichten, welche den Zusammenhalt der einzelnen Scheiben im Verbundglas gewährleisten.

Weiter wird die Verwendung der erfindungsgemäßen Polymerdispersionen oder -lösungen oder erfindungsgemäß hergestellten Polymerpräparationen als Zusatz zu Haftvermittlern oder als Haftvermittler beansprucht. Als Haftvermittler sollen in weiterem Sinne auch Haftmittel verstanden werden, welche z.B. zur Verbesserung der Haftfestigkeit von Anstrichmitteln im Tief- und Hochbau Anwendung finden. So können die erfindungsgemäßen Dispersionen oder Lösungen oder erfindungsgemäß hergestellten Präparationen als Zusatz oder per se, und dann vorzugsweise als Dispersion oder Lösung, zur Grundierung für Außenanstriche Verwendung finden, da hier vor allem die Langzeitbeständigkeit gegen die Einwirkung von Licht, Hitze und/oder Oxidation von Bedeutung ist, um ein Haften des Anstrichmittels auf dem jeweiligen Untergrund zu gewährleisten.

Ist eine Filmbildung der erfindungsgemäßen Dispersionen oder Lösungen oder erfindungsgemäß hergestellten Präparationen mit den übrigen Komponenten des Haftvermittlers (im Falle der Zugabe als Zusatz) gewünscht oder sollen solche Dispersionen, Lösungen oder Präparationen per se als Haftvermittler verwendet werden, so ist, wie bereits oben angesprochen, eine Auswahl der darin enthaltenen Polymeren im Hinblick auf deren für die Anwendung geeignete T_{G} vorzunehmen.

Weiter wird die Verwendung der erfindungsgemäßen Polymerdispersionen oder Polymerlösungen oder erfindungsgemäß hergestellten Polymerpräparationen zum Schutz von Polymerdispersionen, Anstrichmitteln oder Lacken gegen die schädigende Einwirkung von Licht, Hitze und/oder Oxidation beansprucht. Je nach Zusammensetzung der Anstrichmittel oder Lacke kommen dabei entweder Dispersionen/Lösungen oder Präparationen in Frage. Letztere werden vorzugsweise in konventionellen, Lösungsmittel-basierenden Systemen, erstere vorzugsweise in Wasserbasis-Systemen verwendet, wobei hier natürlich auch Präparationen zugegeben werden können. Im Falle der zu stabilisierenden Polymerdispersionen wird man üblicherweise erfindungsgemäße Dispersionen oder Lösungen oder erfindungsgemäß hergestellte Präparationen zugeben, welche Polymere gleichen oder zumindest chemisch ähnlichen Aufbau enthalten. Hierdurch kann man eine ansonsten möglicherweise auftretende Unverträglichkeit (z.B. Koagulation oder Polymerdispersion) in der Regel vermeiden. Auch hier sei, wie bereits oben schon mehrfach angedeutet, auf die Rolle der Glastemperatur bei der Auswahl geeigneter Polymerer, welche in den erfindungsgemäßen Dispersionen oder Lösungen oder erfindungsgemäß hergestellten Präparationen enthalten sind, hingewiesen. Entsprechend der Anwendung der Polymerdispersionen, Anstrichmittel oder Lacke und des damit verbundenen relevanten Temperaturen ist dem Fachmann die Auswahl geeigneter erfindungsgemäßer Dispersionen oder Lösungen oder erfindungsgemäß hergestellter Präparationen in der Regel ohne großen Aufwand möglich.

Weiter wird die Verwendung der erfindungsgemäßen Polymerdispersionen oder -lösungen oder erfindungsgemäß hergestellten Präparationen als Zusatz zu Beschichtungsmitteln oder als Beschichtungsmittel für Substrate zum Schutz solcher Substrate gegen die schädigende Einwirkung von Licht, Hitze und/oder Oxidation beansprucht. Als Substrate kommen dabei beispielsweise in Frage Papier, Kunststoff(-folien), Leder, Metall(-folien), Holz usw. Das Beschichtungsmittel, welches die erfindungsgemäßen Dispersionen, Lösungen oder Präparationen als Zusatz enthält, oder aus diesen besteht, läßt sich dabei zur endgültigen Beschichtung verwenden oder als "Zwischenschicht" auf das Substrat auftragen. In letzterem Fall kann dem Beschichtungsmittel zusätzlich die Wirkung eines Haftvermittlers und/oder Kaschiermittels zukommen.

Weiter wird die Verwendung der erfindungsgemäßen Polymerdispersionen oder -lösungen oder erfindungsgemäß hergestellten Polymerpräparationen zum Schutz von Kunststoffen gegen die schädigende Einwirkung von Licht, Hitze und/oder Oxidation beansprucht. Da Kunststoffe in der Regel als Granulate zur Verfügung stehen, werden vorzugsweise erfindungsgemäße Präparationen (vor der Verarbeitung) dem Kunststoff zugegeben. Im Einzelfall können jedoch auch erfindungsgemäße Dispersionen oder Lösungen Verwendung finden. Hierbei ist es jedoch sinnvoll, eine Vortrocknung, beispielsweise in einem beheizten und mit Rührvorrichtung ausgestattetem Kessel, der Weiterverarbeitung, beispielsweise durch Extrusion, vorzuschalten, da es sonst zu unerwünschter Blasenbildung durch verdampfendes Dispersions- bzw. Lösungsmittel kommen kann. Weiter kann die Verwendung von erfindungsgemäßen Dispersionen oder Lösungen von Vorteil sein, wenn der zu verarbeitende Kunststoff in feinteiliger Form, z.B. als Pulver, vorliegt. Hier kann, durch das vorliegende Dispersions- oder Lösungsmittel, eine staubarme oder staubfreie Mischung resultieren, die - gegebenenfalls nach Vortrocknung - weiterverarbeitet werden kann.

Zur Einarbeitung der erfindungsgemäß hergestellten Polymerpräparationen in den gewünschten Kunststoff mittels hierfür üblicher Aggregate, wie z.B. Extrudern, kann man in der Weise vorgehen, daß diese Einarbeitung anfangs bei Temperaturen unterhalb und anschließend bei Temperaturen oberhalb der T_{G} der jeweils verwendeten Polymerpräparation oder, im Falle von Präparationen, welche mehrere polymere Phasen enthalten, anfangs unterhalb der niedrigsten T_{G} und anschließend oberhalb der höchsten T_{G} erfolgt. Durch diese Vorgehensweise werden anfangs die Primärteilchen/Agglomerate der Polymerpräparation gleichmäßig im Kunststoff dispergiert und anschließend diese erweichten/erschmolzenen Primärteilchen/Agglomerate im mikroskopischen Maßstab mit dem Kunststoff vermischt.

Sofern die erfindungsgemäßen Polymerdispersionen oder Polymerlösungen oder erfindungsgemäß hergestellten Polymerpräparationen nicht per se als Klebstoffe, Kaschiermittel, Haftvermittler oder Beschichtungsmittel verwendet sondern diesen zugesetzt werden, sind sie üblicherweise in Mengen von 0,01 bis 10 Gew.-%, vorzugsweise von 0,02 bis 4 Gew.-% zugegeben. Die Gew.-%-Angaben beziehen sich hierbei im Falle der Dispersionen oder Lösungen auf deren entsprechende Trockenmassen, im Falle der Präparationen auf deren Massen selbst, im Verhältnis zur Summe dieser Trockenmassen und der Trockenmasse der Klebstoffe, Kaschiermittel, Haftvermittler oder Beschichtungsmittel.

Die Zugabe der erfindungsgemäßen Dispersionen oder Lösungen oder erfindungsgemäß hergestellten Präparationen zu organischem Material, pharmazeutischen oder kosmetischen Produkten, als Lichtschutzmittel zu kosmetischen Präparationen, zu Polymerdispersionen, Anstrichmitteln oder Lacken sowie zu Kunststoffen erfolgt ebenfalls in den bereits genannten Konzentrationen, d.h. üblicherweise in Mengen von 0,01 bis 10 Gew.-%, vorzugsweise von 0,02 bis 4 Gew.-%. Auch diese beziehen sich wiederum auf die Trockenmassen.

Die Dispersionen, Lösungen und Präparationen können den besagten Materialien zu einem beliebigen Zeitpunkt zugegeben werden. Können Schädigungen der besagten Materialien durch Licht, Hitze und/oder Oxidation während deren Herstellung oder Aufarbeitung auftreten oder müssen diese Schädigungen zumindest befürchtet werden, so kann die Zugabe bereits vor und/oder während der Herstellung oder Aufarbeitung geschehen. Sollen die besagten Materialien als Endprodukte oder Aufarbeitungsprodukte gegen Licht, Hitze und/oder Oxidation geschützt werden, so ist in der Regel die Zugabe der erfindungsgemäßen Dispersionen oder Lösungen oder erfindungsgemäß hergestellten Präparationen im Anschluß an die Herstellung oder Aufarbeitung ausreichend.

Den besagten Materialien können neben den erfindungsgemäßen Dispersionen, Lösungen oder Präparationen gegebenenfalls noch weitere Zusätze, wie z.B. Metalldesaktivatoren, antistatische Mittel, flammhemmende Mittel, Pigmente und Füllstoffe zugegeben werden.

### Beispiele

### Beispiel 1:

Zu 100 g einer 50%igen wässrigen Dispersion eines Copolymeren aus Styrol, Acrylnitril und Acrylsäure (81,4 : 14,1 : 4,5 Massenprozent; Styrofan^{®} 120 DE, BASF AG Ludwigshafen) läßt man bei Raumtemperatur eine Lösung von 5 g D,L-α-Tocopherol in 20 ml Methanol zulaufen und rührt die Mischung 1 Std. bei Raumtemperatur nach. Die Probe wird bei 70°C im Vakuum getrocknet und anschließend gemahlen.

Man erhält 55 g eines rieselfähigen Pulvers.

### Beispiel 2:

Zu 50 g einer 50%igen wässrigen Dispersion eines Copolymeren aus Styrol, Acrylnitril und Acrylsäure (81,4 : 14,1 : 4,5 Massenprozent; Styrofan 120 DE, BASF AG Ludwigshafen) läßt man bei Raumtemperatur eine Lösung von 5 g D,L-α-Tocopherol in 20 ml Methanol zulaufen und rührt die Mischung 1 Std. bei Raumtemperatur nach. Die Probe wird bei 70°C im Vakuum getrocknet und anschließend gemahlen.

Man erhält 30 g eines rieselfähigen Pulvers.

### Beispiel 3:

Zu 100 g einer 50%igen wässrigen Dispersion eines Copolymeren aus Styrol, Acrylnitril und Acrylsäure (81,4 : 14,1 : 4,5 Massenprozent; Styrofan 120 DE, BASF AG Ludwigshafen) läßt man bei Raumtemperatur 5 g D,L-α-Tocopherol zulaufen und rührt die Mischung 1 Std. bei Raumtemperatur nach. Die Probe wird bei 70°C im Vakuum getrocknet und anschließend gemahlen.

Man erhält 55 g eines rieselfähigen Pulvers.

### Beispiel 4:

Zu 100 g einer 50%igen wässrigen Dispersion eines Copolymeren aus Styrol, Acrylnitril und Acrylsäure (81,4 : 14,1 : 4,5 Massenprozent; Styrofan 120 DE, BASF AG Ludwigshafen) läßt man bei Raumtemperatur 5 g D, L-α-Tocopherol zulaufen und rührt die Mischung 1 Std. bei Raumtemperatur nach. Die Probe wird bei -10°C gefrostet und 20 h im Gefriertrockner (Gerätetyp Lyovac GT2 der Fa. Leybold/Heraeus) bei Raumtemperatur getrocknet.

Man erhält 55 g eines rieselfähigen Pulvers.

### Beispiel 5:

Zu 800 g einer 50%igen wässrigen Dispersion eines Copolymeren aus Styrol, Acrylnitril und Acrylsäure (81,4 : 14,1 : 4,5 Massenprozent; Styrofan 120 DE, BASF AG Ludwigshafen) läßt man bei Raumtemperatur 80 g D, L-α-Tocopherol zulaufen und rührt die Mischung 1 Std. bei Raumtemperatur nach. Die Probe wird sprühgetrocknet, N₂-Eingangstemperatur 120°C, N₂-Ausgangstemperatur 70°C.

Man erhält 420 g eines rieselfähigen Pulvers.

### Beispiel 6:

Es wird analog zu Beispiel 5 verfahren. Anstelle von D, L-α-Tocopherol wird eine Mischung aus D, L-α-Tocopherol und Tris(4-nonylphenyl)phosphit verwendet. Man erhält 400 g eines rieselfähigen Pulvers.

### Beispiel 7:

Zu 50 g einer 50%igen wässrigen Dispersion eines Copolymeren aus Styrol, Methylmethacrylat, n-Butylacrylat und Acrylsäure (50 : 29 : 19 : 2 Massenprozent; Acronal^{®} 3483, BASF AG Ludwigshafen) läßt man bei Raumtemperatur 5 g D, L-α-Tocopherol zulaufen und rührt die Mischung 1 Std. bei Raumtemperatur nach. Die Probe wird bei -10°C gefrostet und 20 h im Gefriertrockner bei Raumtemperatur getrocknet.

Man erhält 30 g eines rieselfähigen Pulvers.

### Beispiel 8:

Zu 50 g einer 50%igen wässrigen Dispersion eines Copolymeren aus Methylmethacrylat, n-Butylacrylat und Acrylsäure (60 : 30 : 10 Massenprozent; Acronal^{®} 969, BASF AG Ludwigshafen) läßt man bei Raumtemperatur 5 g D,L-α,-Tocopherol zulaufen und rührt die Mischung 1 Std. bei Raumtemperatur nach. Die Probe wird bei -10°C gefrostet und 20 h im Gefriertrockner bei Raumtemperatur getrocknet.

Man erhält 30 g eines rieselfähigen Pulvers.

## Patentansprüche

1. Polymerdispersionen oder Polymerlösungen, welche im wesentlichen Wasser als Dispersionsmittel oder Lösungsmittel enthalten, enthaltend mindestens eine polymere Phase, welche Tocopherole in einem Anteil, bezogen auf die dispersionsmittel- bzw. lösungsmittelfreie Gesamtmenge aus Polymer und Tocopherolen, von 5 bis 30 Gew.-% enthält.

2. Polymerdispersionen oder Polymerlösungen nach Anspruch 1, enthaltend mindestens eine polymere Phase, welche durch radikalische Polymerisation von einem oder mehreren ethylenisch ungesättigten Monomeren erhältlich ist.

3. Polymerdispersionen oder Polymerlösungen nach Anspruch 2, enthaltend mindestens eine polymere Phase, welche durch radikalische Polymerisation von einem oder mehreren ethylenisch ungesättigten Monomeren, ausgewählt aus den Gruppen
A) C₂-C₈-Alkene und deren Halogenide,
B) C₄-C₈-Alkadiene und deren Halogenide,
C) C₃-C₈-Alkensäuren und C₃-C₈-Alkensäure-C₁-C₂₀-alkylester,
D) Vinylalkylether mit C₁-C₂₀-Alkylresten,
E) Vinylester von C₁-C₂₀-Carbonsäuren,
F) C₈-C₂₀-Vinylaromaten,
G) C₇-C₁₉-Vinyl-N-Heteroaromaten,
H) C₃-C₈-Alkensäurenitrile,
I) C₃-C₈-Alkensäureamide und
J) Verbindungen der Formel 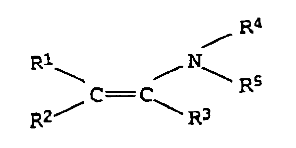
worin bedeuten
R¹, R², R³, R⁴, R⁵ unabhängig voneinander Wasserstoff oder C₁-C₈-Alkyl, in welchem bis zu drei nicht benachbarte C-Atome durch N, NH oder N(C₁-C₄-Alkyl) und/oder bis zu drei nicht benachbarte CH₂-Gruppen durch Carbonyl-gruppen ersetzt sein können, mit der Maßgabe, daß mindestens einer der Reste R⁴ oder R⁵ verschieden von Wasserstoff ist, oder
R¹, R², R³ haben die vorher genannte Bedeutung und R⁴ und R⁵ bilden zusammen eine ungesättigte oder gesättigte C₃-, C₄-, C₅- oder C₆-Alkylenbrücke, in welcher bis zu zwei nicht benachbarte C-Atome durch N, NH oder N(C₁-C₄-Alkyl) und/oder bis zu zwei nicht benachbarte CH₂-Gruppen durch Carbonyl-gruppen ersetzt sein können,
erhältlich sind.

4. Verfahren zur Herstellung von Polymerpräparationen, welche Tocopherole enthalten, **dadurch gekennzeichnet, daß** man das Dispersionsmittel oder Lösungsmittel aus den Polymerdispersionen oder Polymerlösungen gemäß den Ansprüchen 1 bis 3 entfernt.

5. Verfahren zur Herstellung von Polymerdispersionen oder Polymerlösungen gemäß den Ansprüchen 1 bis 3, **dadurch gekennzeichnet, daß** man Tocopherole solche Tocopherole nicht enthaltenden Polymerdispersionen oder Polymerlösungen zugibt.

6. verfahren nach Anspruch 5, **dadurch gekennzeichnet, daß** die Zugabe der Tocopherole bei einer Temperatur von 15 bis 95°C erfolgt.

7. Verwendung von Polymerdispersionen oder Polymerlösungen gemäß den Ansprüchen 1 bis 3 oder von Polymerpräparationen hergestellt gemäß Anspruch 4 zum Schutz von organischem Material gegen die schädigende Einwirkung von Licht, Hitze und/oder Oxidation.

8. Verwendung von Polymerdispersionen oder Polymerlösungen gemäß den Ansprüchen 1 bis 3 oder von Polymerpräparationen hergestellt gemäß Anspruch 4 zum Schutz von pharmazeutischen oder kosmetischen Produkten gegen die schädigende Einwirkung von Licht, Hitze und/oder Oxidation.

9. Verwendung von Polymerdispersionen oder Polymerlösungen gemäß den Ansprüchen 1 bis 3 oder einer Polymerpräparation hergestellt gemäß Anspruch 4 als Lichtschutzmittel in kosmetischen Präparationen.

10. Verwendung von Polymerdispersionen oder Polymerlösungen gemäß den Ansprüchen 1 bis 3 oder einer Polymerpräparation hergestellt gemäß Anspruch 4 als Zusatz zu Klebstoffen oder als Klebstoff.

11. Verwendung von Polymerdispersionen oder Polymerlösungen gemäß den Ansprüchen 1 bis 3 oder von Polymerpräparationen hergestellt gemäß Anspruch 4 als Zusatz zu Kaschiermitteln oder als Kaschiermittel.

12. Verwendung von Polymerdispersionen oder Polymerlösungen gemäß den Ansprüchen 1 bis 3 oder von Polymerpräparationen hergestellt gemäß Anspruch 4 als Zusatz zu Haftvermittlern oder als Haftvermittler.

13. Verwendung von Polymerdispersionen oder Polymerlösungen gemäß den Ansprüchen 1 bis 3 oder von Polymerpräparationen hergestellt gemäß Anspruch 4 zum Schutz von Polymerdispersionen, Anstrichmitteln oder Lacken gegen die schädigende Einwirkung von Licht, Hitze und/oder Oxidation.

14. Verwendung von Polymerdispersionen oder Polymerlösungen gemäß den Ansprüchen 1 bis 3 oder von Polymerpräparationen hergestellt gemäß Anspruch 4 als Zusatz zu Beschichtungsmitteln oder als Beschichtungsmittel für Substrate zum Schutz solcher Substrate gegen die schädigende Einwirkung von Licht, Hitze und/oder Oxidation.

15. Verwendung von Polymerdispersionen oder Polymerlösungen gemäß den Ansprüchen 1 bis 3 oder von Polymerpräparationen hergestellt gemäß Anspruch 4 zum Schutz von Kunststoffen gegen die schädigende Einwirkung von Licht, Hitze und/oder Oxidation.

## Claims

1. A polymer dispersion or polymer solution which comprises essentially water as dispersion medium or solvent, comprising at least one polymeric phase which comprises tocopherols, in a proportion, based on the dispersion medium-free and/or solvent-free total amount of polymer and tocopherols, of from 5% to 30% by weight.

2. The polymer dispersion or polymer solution according to claim 1 comprising at least one polymeric phase obtainable by free-radical polymerization of one or more ethylenically unsaturated monomers.

3. The polymer dispersion or polymer solution according to claim 2 comprising at least one polymeric phase obtainable by free-radical polymerization of one or more ethylenically unsaturated monomers selected from the following groups:
A) C₂-C₈-alkenes and their halides,
B) C₄-C₈-alkadienes and their halides,
C) C₃-C₈-alkenoic acids and C₁-C₂₀-alkyl C₃-C₈-alkenoates,
D) vinyl alkyl ethers with C₁-C₂₀-alkyl radicals,
E) vinyl esters of C₁-C₂₀ carboxylic acids,
F) C₈-C₂₀-vinylaromatic compounds,
G) C₇-C₁₉-vinyl-N-heteroaromatic compounds,
H) C₃-C₈-alkenenitriles,
I) C₃-C₈-alkenamides and
J) compounds of the formula 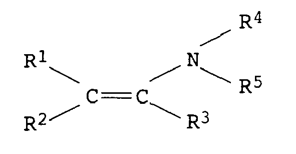
where
R¹, R², R³, R⁴, R⁵ independently of one another are hydrogen of C₁-C₈-alkyl in which up to three nonadjacent carbon atoms can be replaced by N, NH or N(C₁-C₄-alkyl) and/or up to three nonadjacent CH₂ groups by carbonyl groups, with the proviso that at least one of R⁴ and R⁵ is other than hydrogen, or
R¹, R², R³ are as defined above and R⁴ and R⁵ together form an unsaturated or saturated C₃-, C₄-, C₅- or C₆-alkylene bridge in which up to two nonadjacent carbon atoms can be replaced by N, NH or N(C₁-C₄-alkyl) and/or up to two nonadjacent CH₂ groups by carbonyl groups.

4. A process for preparing a polymer preparation which comprises tocopherols, which comprises removing the dispersion medium or solvent from a polymer dispersion or polymer solution according to any of claims 1 to 3.

5. A process for preparing a polymer dispersion or polymer solution according to any of claims 1 to 3 which comprises adding tocopherols to a polymer dispersion or polymer solution which does not comprise such tocopherols.

6. The process according to claim 5, wherein the tocopherols are added at a temperature of from 15 to 95°C.

7. The use of a polymer dispersion or polymer solution according to any of claims 1 to 3 or of a polymer prepared according to claim 4 for protecting organic material against the damaging effect of light, heat and/or oxidation.

8. The use of a polymer dispersion or polymer solution according to any of claims 1 to 3 or of a polymer prepared according to claim 4 for protecting pharmaceutical or cosmetic products against the damaging effect of light, heat and/or oxidation.

9. The use of a polymer dispersion or polymer solution according to any of claims 1 to 3 or of a polymer prepared according to claim 4 as a light stabilizer in cosmetic preparations.

10. The use of a polymer dispersion or polymer solution according to any of claims 1 to 3 or of a polymer prepared according to claim 4 in or as an adhesive.

11. The use of a polymer dispersion or polymer solution according to any of claims 1 to 3 or of a polymer prepared according to claim 4 in or as a laminant.

12. The use of a polymer dispersion or polymer solution according to any of claims 1 to 3 or of a polymer prepared according to claim 4 in or as an adhesion promoter.

13. The use of a polymer dispersion or polymer solution according to any of claims 1 to 3 or of a polymer prepared according to claim 4 for protecting polymer dispersions, paints or varnishes against the damaging effect of light, heat and/or oxidation.

14. The use of a polymer dispersion or polymer solution according to any of claims 1 to 3 or of a polymer prepared according to claim 4 in or as a coating composition for substrates to protect such substrates against the damaging effect of light, heat and/or oxidation.

15. The use of a polymer dispersion or polymer solution according to any of claims 1 to 3 or of a polymer prepared according to claim 4 for protecting plastics against the damaging effect of light, heat and/or oxidation.

## Revendications

1. Dispersions ou solutions polymères qui contiennent essentiellement de l'eau comme agent dispersant ou solvant, constituées d'au moins une phase polymère qui contient des tocophérols dans une proportion de 5 à 30 % en poids par rapport à la quantité totale de polymères et de tocophérols, exempte d'agent dispersant ou de solvant.

2. Dispersions ou solutions polymères selon la revendication 1, contenant au moins une phase polymère qui est obtenue par polymérisation radicalaire d'un ou plusieurs monomères éthyléniquement insaturés.

3. Dispersions ou solutions polymères selon la revendication 2, contenant au moins une phase polymère qui est obtenue par polymérisation radicalaire d'un ou plusieurs monomères éthyléniquement insaturés sélectionnés parmi les groupes :
A) C₂-C₈-alcènes et leurs halogénures;
B) C₄-C₈-alcadiènes et leurs halogénures;
C) acides C₃-C₈-alcéniques et C₁-C₂₀-alkylester d'acide C₃-C₈-alcénique;
D) vinylalkyléthers avec restes C₁-C₂₀-alkyle;
E) vinylesters d'acides C₁-C₂₀-carboxyliques;
F) C₈-C₂₀-vinylaromatiques;
G) C₇-C₁₉-vinyl-N-hétéroaromatiques;
H) nitriles d'acide C₃-C₈-alcénique;
I) amides d'acide C₃-C₈-alcénique et
J) composés de formule 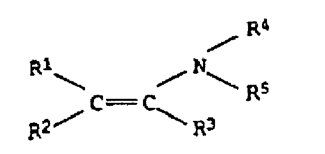
dans laquelle :
R¹, R², R³, R⁴, R⁵ désignent, indépendamment l'un de l'autre, l'hydrogène ou un radical C₁-C₈-alkyle dans lequel jusqu'à trois atomes C non voisins peuvent être remplacés par N, NH ou N(C₁-C₄-alkyle) et/ou jusqu'à trois groupes CH₂ par des groupes carbonyle, étant entendu qu'au moins l'un des restes R⁴ ou R⁵ est différent de l'hydrogène, ou
R¹, R², R³ ont la signification précitée et R⁴ et R⁵ forment ensemble un pont C₃-, C₄, C₅- ou C₆-alkylène insaturé ou saturé dans lequel jusqu'à deux atomes C non voisins peuvent être remplacés par N, NH ou N(C₁-C₄-alkyle) et/ou jusqu'à deux groupes CH₂ non voisins par des groupes carbonyle.

4. Procédé de synthèse de préparations polymères qui contiennent des tocophérols, **caractérisé en ce que** l'on élimine l'agent dispersant ou le solvant des dispersions ou solutions polymères selon l'une des revendications 1 à 3.

5. Procédé de synthèse de dispersions ou solutions polymères selon l'une des revendications 1 à 3, **caractérisé en ce que** l'on ajoute des tocophérols à des solutions ou dispersions polymères ne contenant pas de tels tocophérols.

6. Procédé selon la revendication 5, **caractérisé en ce que** l'addition des tocophérols se déroule à une température de 15 à 95°C.

7. Utilisation de dispersions ou solutions polymères selon l'une des revendications 1 à 3 ou de préparations polymères synthétisées selon la revendication 4 pour la protection de matière organique contre l'action néfaste de la lumière, de la chaleur et/ou de l'oxydation.

8. Utilisation de dispersions ou solutions polymères selon l'une des revendications 1 à 3 ou de préparations polymères synthétisées selon la revendication 4 pour la protection de produits pharmaceutiques ou cosmétiques contre l'action néfaste de la lumière, de la chaleur et/ou de l'oxydation.

9. Utilisation de dispersions ou solutions polymères selon l'une des revendications 1 à 3 ou d'une préparation polymère synthétisée selon la revendication 4 comme agent photoprotecteur dans les préparations cosmétiques.

10. Utilisation de dispersions ou solutions polymères selon l'une des revendications 1 à 3 ou d'une dispersion polymère synthétisée selon la revendication 4 comme additif à des adhésifs ou comme adhésif.

11. Utilisation de dispersions ou solutions polymères selon l'une des revendications 1 à 3 ou de préparations polymères synthétisées selon la revendication 4 comme additif à des agents de contrecollage ou comme agent de contrecollage.

12. Utilisation de dispersions ou solutions polymères selon l'une des revendications 1 à 3 ou de préparations polymères synthétisées selon la revendication 4 comme additif à des agents d'adhésivité ou comme agent d'adhésivité.

13. Utilisation de dispersions ou solutions polymères selon l'une des revendications 1 à 3 ou de préparations polymères synthétisées selon la revendication 4 pour la protection de dispersions polymères, d'agents de revêtement ou de peintures contre l'action néfaste de la lumière, de la chaleur et/ou de l'oxydation.

14. Utilisation de dispersions ou solutions polymères selon l'une des revendications 1 à 3 ou de préparations polymères synthétisées selon la revendication 4 comme additif à des agents d'enduction ou comme agent d'enduction pour des substrats en vue de la protection desdits substrats contre l'action néfaste de la lumière, de la chaleur et/ou de l'oxydation.

15. Utilisation de dispersions ou solutions polymères selon l'une des revendications 1 à 3 ou de préparations polymères synthétisées selon la revendication 4 pour la protection de plastiques contre l'action néfaste de la lumière, de la chaleur et/ou de l'oxydation.
